# EUROPÄISCHE PATENTANMELDUNG

(11) **EP 4 656 594 A1**
(43) Veröffentlichungstag der Anmeldung: **03.12.2025**
(21) Anmeldenummer: 24020171.5
(22) Anmeldetag: 27.05.2024
(51) Int. Cl.: C01B 3/32, C01B 3/48, C01B 3/50

(54) **VERFAHREN UND ANLAGE ZUR HERSTELLUNG EINES WASSERSTOFFPRODUKTS UND EINES KOHLENMONOXIDPRODUKTS**

(71) Anmelder: Linde GmbH, 82049 Pullach (DE)
(72) Erfinder: Ettner, Florian, 82049 Pullach (DE); Leitmayr, Werner, 82049 Pullach (DE); Ried, Thomas, 82049 Pullach (DE); Trott, Thomas, 82049 Pullach (DE)
(74) Vertreter: Fischer, Werner

(57) **Zusammenfassung**

Ein Verfahren (100) zur Herstellung eines Wasserstoffprodukts (110) und eines Kohlenmonoxidprodukts (120) wird vorgeschlagen. Dieses umfasst das Bereitstellen eines ersten Komponentengemischs (102), das Wasserstoff und Kohlenmonoxid in einem ersten Verhältnis von Wasserstoff zu Kohlenmonoxid aufweist, das Bereitstellen eines zweiten Komponentengemischs (105) unter Verwendung des ersten Komponentengemischs (102) oder eines Teils hiervon, wobei das zweite Komponentengemischs (105) Wasserstoff und Kohlenmonoxid in einem zweiten Verhältnis von Wasserstoff zu Kohlenmonoxid oberhalb des ersten Verhältnisses von Wasserstoff zu Kohlenmonoxid sowie Kohlendioxid aufweist, und das Unterwerfen des zweiten Komponentengemischs (105) oder eines Teils hiervon einer Trennsequenz, wobei die Trennsequenz eine Wasserstoffabtrennung (40) unter Erhalt des Wasserstoffprodukts (110), eine Kohlendioxidabtrennung (50) und eine Kohlenmonoxidabtrennung (60) unter Erhalt des Kohlenmonoxidprodukts (120) umfasst und die Wasserstoffabtrennung (40) und die Kohlendioxidabtrennung (50) stromauf der Kohlenmonoxidabtrennung (60) vorgenommen werden. Eine entsprechende Anlage wird ebenfalls vorgeschlagen.

## Beschreibung

### Gebiet

Die vorliegende Offenbarung betrifft ein Verfahren und eine Anlage zur Herstellung eines Wasserstoffprodukts und eines Kohlenmonoxidprodukts.

### Hintergrund

Die gleichzeitige Erzeugung von Wasserstoff und Kohlenmonoxid im industriellen Maßstab kann in einer sogenannten HyCO-Anlage (engl. "Hydrogen and CO") erfolgen. In einer solchen Anlage wird aus einem kohlenwasserstoffhaltigen Einsatzstoff zunächst ein Synthesegas erzeugt. Je nach eingesetzter Technologie (z.B. Dampfreformierung, Autothermreformierung, Partialoxidation, die weiterhin mit einem gasbeheizten Reformer kombiniert werden können) und Einsatzstoff (z.B. Erdgas, Biogas, Restgase, Kohlendioxidbeimischung, flüssige oder feste Kohlenwasserstoffe, Kohle) ergibt sich im Synthesegas ein charakteristisches Verhältnis von Wasserstoff zu Kohlenmonoxid.

Das Synthesegas wird anschließend durch weitere Trennschritte (z.B. kryogene Trennverfahren, Membranen, Druckwechseladsorption) in ein Wasserstoffprodukt und ein Kohlenmonoxidprodukt getrennt. Das Kohlenmonoxidprodukt wird dabei üblicherweise in einem kryogenen Verfahren (Kondensationsprozess oder Methanwäsche in einer sogenannten Coldbox) gewonnen. Für das Funktionieren dieses Prozesses ist je nach Verfahren ein bestimmter Mindestgehalt an Kohlenmonoxid im Prozessgas erforderlich, was dem Erzielen sehr hoher Verhältnisse von Wasserstoff zu Kohlenmonoxid im Wege steht.

Üblicherweise bewegt sich das molare Verhältnis von Wasserstoff zu Kohlenmonoxid in einem Bereich zwischen 1:1 und 8:1. Im Synthesegas könnten zwar deutlich höhere Verhältnisse eingestellt werden, indem man das Synthesegas einer Wassergasshift unterzieht. Dies kann jedoch die Gewinnung des Kohlenmonoxidprodukts aufgrund des geringen Kohlenmonoxidgehalts in herkömmlichen Verfahren unwirtschaftlich bis unmöglich machen.

Daher umfasst der Stand der Technik zur Erzielung hoher Verhältnisse von Wasserstoff zu Kohlenmonoxid entweder die Trennung des Synthesegases in einen geshifteten und einen ungeshifteten Strang, was mit erheblichen Mehrinvestitionen verbunden ist, da zahlreiche Apparate dadurch zweifach vorhanden sein müssen, oder die energetische Nutzung, d.h. Verbrennung, eines Teils des teuer erzeugten Kohlenmonoxidprodukts. Letzteres ist zudem verbunden mit hohen Kohlendioxidemissionen, sofern keine Entfernung von Kohlendioxid aus dem Rauchgas zusätzlich installiert wird.

Beide Alternativen sind im Hinblick auf die in Zukunft immer bedeutender werdende Wasserstoffwirtschaft nicht zufriedenstellend.

### Übersicht

Vor diesem Hintergrund werden ein Verfahren und eine Anlage zur Herstellung eines Wasserstoffprodukts und eines Kohlenmonoxidprodukts mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren zur Herstellung eines Wasserstoffprodukts und eines Kohlenmonoxidprodukts umfasst das Bereitstellen eines ersten Komponentengemischs, wobei das erste Komponentengemisch Wasserstoff und Kohlenmonoxid in einem ersten Verhältnis von Wasserstoff zu Kohlenmonoxid aufweist, das Bereitstellen eines zweiten Komponentengemischs unter Verwendung des ersten Komponentengemischs oder eines Teils hiervon, wobei das zweite Komponentengemisch Wasserstoff und Kohlenmonoxid in einem zweiten Verhältnis von Wasserstoff zu Kohlenmonoxid oberhalb des ersten Verhältnisses von Wasserstoff zu Kohlenmonoxid sowie Kohlendioxid aufweist, und das Unterwerfen des zweiten Komponentengemischs oder eines Teils hiervon einer Trennsequenz. Die Trennsequenz umfasst in dem hier vorgeschlagenen Verfahren eine Wasserstoffabtrennung unter Erhalt des Wasserstoffprodukts, eine Kohlendioxidabtrennung und eine Kohlenmonoxidabtrennung unter Erhalt des Kohlenmonoxidprodukts, wobei die Wasserstoffabtrennung und die Kohlendioxidabtrennung in dem hier vorgeschlagenen Verfahren stromauf der Kohlenmonoxidabtrennung vorgenommen werden.

Die vorgeschlagenen Ausgestaltungen umfassen Modifikationen bekannter HyCO-Prozesse, mittels derer ermöglicht wird, dass in einem Strang ein Wasserstoffprodukt und ein Kohlenmonoxidprodukt erzeugt werden können, wobei sehr hohe molare Verhältnisse von Wasserstoff zu Kohlenmonoxid erreichbar sind.

Im Gegensatz zu anderen Verfahren müssen in den hier vorgeschlagenen Ausgestaltungen keine zwei voneinander getrennten Anlagenstränge eingerichtet werden, was die Investitionskosten deutlich verringert. Ebenso besteht keine Veranlassung, wertvolles Kohlenmonoxidprodukt zu verbrennen, um das gewünschte Produktverhältnis von Wasserstoff und Kohlenmonoxid einzustellen.

Vorzugsweise wird das erste Komponentengemisch, bei dem es sich beispielsweise um ein aus einem kohlenwasserstoffhaltigen Einsatzstoff gewonnenes Synthesegas handelt, in dem vorgeschlagenen Verfahren nicht in zwei Stränge aufgeteilt, sondern insgesamt einer Wassergasshift unterzogen, um das Verhältnis von Wasserstoff und Kohlenmonoxid entsprechend des erforderlichen Produktverhältnisses zu erhöhen und das zweite Komponentengemisch zu erhalten, aus dem anschließend Kohlendioxid, Wasserstoff und Kohlenmonoxid abgetrennt werden.

Hier vorgeschlagene Ausgestaltungen können umfassen, die Wasserstoffabtrennung stromauf oder stromab der Kohlendioxidabtrennung vorzunehmen. In beiden Fällen ergeben sich vorteilhafte Effekte durch eine Reduzierung des Gasvolumens und die Erhöhung des Kohlenmonoxidgehalts des verbleibenden Gasgemischs.

In Ausgestaltungen des vorgeschlagenen Verfahrens kann das Verhältnis von Wasserstoff zu Kohlenmonoxid in dem zweiten Komponentengemisch bei 5:1 bis 50:1 oder 10:1 bis 20:1 liegen, ggf. auch bei höheren Werten. Ein Teil des ersten Komponentengemischs kann im Bypass zur Wassergasshift geführt werden, um das Verhältnis von Wasserstoff zu Kohlendioxid im zweiten Komponentengemisch einzustellen.

Die in Ausgestaltungen der Erfindung vorgesehene Wasserstoffabtrennung kann insbesondere eine Druckwechseladsorption umfassen, da sich mit dieser besonders hohe Wasserstoffreinheiten erzielen lassen.

In Ausgestaltungen des vorgeschlagenen Verfahrens kann vorgesehen sein, dass nach der Wasserstoffabtrennung ein drittes Komponentengemisch verbleibt, das in der Wasserstoffabtrennung nicht abgetrennten Wasserstoff, Kohlenmonoxid und Kohlendioxid umfasst, wobei das dritte Komponentengemisch oder ein Teil hiervon der Kohlendioxidabtrennung unterworfen wird.

In Ausgestaltungen des vorgeschlagenen Verfahrens kann vorgesehen sein, dass nach der Kohlendioxidabtrennung ein viertes Komponentengemisch verbleibt, das Wasserstoff und Kohlenmonoxid umfasst und im Wesentlichen frei von Kohlendioxid ist, wobei das vierte Komponentengemisch oder ein Teil hiervon der Kohlenmonoxidabtrennung unterworfen wird.

Das erste bis vierte Komponentengemisch kann insbesondere auch nicht umgesetzte Kohlenwasserstoffe, insbesondere Methan, sowie Inertgase wie Stickstoff und Argon umfassen, die in der Kohlenmonoxidabtrennung, ggf. zusammen mit verbliebenem Wasserstoff, von Kohlenmonoxid getrennt werden.

Die Kohlendioxidabtrennung kann adsorptiv und/oder absorptiv und/oder kryogen erfolgen. Des Weiteren kann die Kohlendioxidabtrennung sequentiell erfolgen, indem zuerst ein geeignetes Verfahren zur Grobreinigung und anschließend ein geeignetes Verfahren zur Feinreinigung eingesetzt wird. Kohlendioxid kann durch geeignete Prozessführung gasförmig, flüssig oder überkritisch gewonnen werden.

In Ausgestaltungen des vorgeschlagenen Verfahrens kann vorgesehen sein, dass die Kohlenmonoxidabtrennung eine Tieftemperaturtrennung umfasst. Diese kann mit an sich bekannten Mitteln, insbesondere unter Verwendung einer Coldbox, und in der eingangs erläuterten Weise erfolgen.

In Ausgestaltungen des vorgeschlagenen Verfahrens kann vorgesehen sein, dass in der Kohlendioxidabtrennung und/oder in der Kohlenmonoxidabtrennung ein oder mehrere Restgase erhalten werden, wobei das eine Restgas oder zumindest eines der mehreren Restgase, oder ein oder mehrere Teile hiervon, in das Verfahren zurückgeführt und/oder einer thermischen Verwertung unterworfen werden. Durch Rückführung der in den einzelnen Trennschritten anfallenden Restgase (z.B. einer Methanfraktion aus der Coldbox) in den Prozess können sehr hohe Kohlenstoffabtrennraten erreicht werden (98% und mehr), wodurch die Kohlendioxidemissionen in die Atmosphäre minimiert werden.

In Ausgestaltungen des vorgeschlagenen Verfahrens kann vorgesehen sein, dass die Bereitstellung des ersten Komponentengemischs eine Umsetzung eines oder mehrerer Kohlenwasserstoffe mittels Dampfreformierung, Autothermreformierung und/oder Partialoxidation, optional gekoppelt mit einem gasbeheizten Reformer, umfasst.

Die vorgeschlagene Anlage zur Herstellung eines Wasserstoffprodukts und eines Kohlenmonoxidprodukts ist für das Bereitstellen eines ersten Komponentengemischs, wobei das erste Komponentengemisch Wasserstoff und Kohlenmonoxid in einem ersten Verhältnis von Wasserstoff zu Kohlenmonoxid aufweist, für das Bereitstellen eines zweiten Komponentengemischs unter Verwendung des ersten Komponentengemischs oder eines Teils hiervon, wobei das zweite Komponentengemischs Wasserstoff und Kohlenmonoxid in einem zweiten Verhältnis von Wasserstoff zu Kohlenmonoxid oberhalb des ersten Verhältnisses von Wasserstoff zu Kohlenmonoxid sowie Kohlendioxid aufweist, und für das Unterwerfen des zweiten Komponentengemischs oder eines Teils hiervon einer Trennsequenz eingerichtet.

Die Trennsequenz umfasst dabei eine Wasserstoffabtrennung zum Erhalt des Wasserstoffprodukts, eine Kohlendioxidabtrennung und eine Kohlenmonoxidabtrennung zum Erhalt des Kohlenmonoxidprodukts, wobei die Wasserstoffabtrennung und die Kohlendioxidabtrennung stromauf der Kohlenmonoxidabtrennung angeordnet sind.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

### Zeichnungen

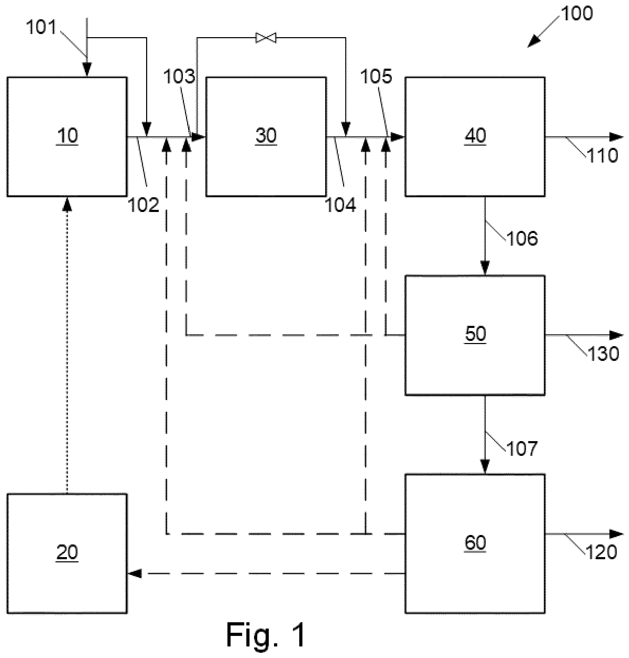

Ausführungsformen von hier vorgeschlagenen Lösungen werden nachfolgend rein beispielhaft unter Bezugnahme auf die beigefügte Zeichnung beschrieben, wobei Figur 1 ein Verfahren gemäß einer vorgeschlagenen Ausgestaltung veranschaulicht.

### Ausführungsformen

Die nachfolgend beschriebenen Ausführungsformen und Ausgestaltungen werden nur zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale vorgeschlagener Verfahren und Vorrichtungen nicht abschließend und/oder beschränkend betrachtet werden.

Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Ansprüche oder als Beschränkungen von Äquivalenten hierzu zu betrachten sind, und dass andere Ausführungsformen verwendet und Änderungen vorgenommen werden können, ohne vom Umfang der Ansprüche abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind.

Erläuterungen, die sich auf Vorrichtungen, Apparate, Anordnungen, Systeme usw. gemäß vorgeschlagenen Ausführungsformen beziehen, können auch für Verfahren, Prozesse, Methoden usw. gemäß anderen Ausführungsformen gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorstehenden und nachfolgenden Erläuterungen und Definitionen können für alle oder einen Teil der hier vorgestellten Ausgestaltungen gelten, und die Erläuterung bestimmter Aspekte im Zusammenhang mit nur einem Teil oder einer der Ausgestaltungen soll keineswegs dahingehend verstanden werden, dass diese Aspekte nicht auch mit anderen oder allen Ausgestaltungen, soweit technisch möglich und sinnvoll, verwirklicht sein können.

Immer dann, wenn zuvor und nachfolgend von "Wasserstoff" oder "Kohlenmonoxid" oder einem entsprechenden "Produkt" die Rede ist, seien darunter auch Gemische verstanden, die die jeweils bezeichnete Verbindung als Hauptkomponente, insbesondere im soeben erläuterten Sinn im Wesentlichen, enthalten.

Die Konjunktion "und/oder" soll, wenn in einer Aufzählung vor dem letzten Begriff der Aufzählung verwendet, so verstanden werden, dass alle in der Aufzählung zuvor und danach genannten Begriffe beliebig miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

In Figur 1 ist ein Verfahren bzw. eine Anlage 100 zur Herstellung eines Wasserstoffprodukts 110 und eines Kohlenmonoxidprodukts 120 veranschaulicht. Mittels des Verfahrens bzw. der Anlage 100 wird ferner ein Kohlendioxidprodukt 130 bereitgestellt, das beispielsweise einer Sequestrierung oder einer Weiterverarbeitung, beispielsweise zur Herstellung von Methanol, zugeführt werden kann.

Dem Verfahren bzw. der Anlage 100 wird ein kohlenwasserstoffhaltiger Einsatz 101 zugeführt, von dem ein Teil einer Synthesegaserzeugung 10 zugeführt und ein weiterer Teil einem in der Synthesegaserzeugung 10 erhaltenen Komponentengemisch 102, einem Synthesegas, zugespeist werden kann. Der Einsatz kann einer Einsatzvorbehandlung beliebiger Art unterworfen werden, um unerwünschte Komponenten zu entfernen. Die Einsatzvorbehandlung kann beispielsweise eine Entwschefelung umfassen. Diese ist lediglich aus Gründen der Übersichtlichkeit nicht als gesonderter Schritt bzw. gesonderte Anlagenkomponente veranschaulicht.

Bei der Synthesegaserzeugung 10 kann Wärme aus einer Feuerung 20 genutzt werden, wie mit einem strichpunktiert dargestellten Pfeil veranschaulicht. Beispielsweise kann eine Vorwärmung des Einsatzes 101 und/oder eine Beheizung der verwendeten Reaktoreinheit vorgenommen werden. Allgemeiner gesprochen kann ein erstes Komponentengemisch 102 bereitgestellt werden, das Wasserstoff und Kohlenmonoxid in einem ersten Verhältnis von Wasserstoff zu Kohlenmonoxid aufweist.

Nach einer optional erfolgenden Zuspeisung eines oder mehrerer Restgase, wie hier allgemein mit gestrichelten Pfeilen veranschaulicht, kann ein aus dem Komponentengemisch 102 und ggf. entsprechenden Zuspeisungen erhaltenes Komponentengemisch 103 zu einem ersten Anteil als Konvertierungseinsatz einer Konvertierung 30 unterworfen werden, in welcher mittels Wassergasshift durch Umsetzen von Kohlenmonoxid mit Wasser unter Erhalt von Kohlendioxid und Wasserstoff ein Verhältnis von Wasserstoff zu Kohlenmonoxid erhöht wird. Zu einem zweiten Anteil kann das Komponentengemisch 103 um die Konvertierung 30 herumgeführt werden. Nach einer Vereinigung eines in der Konvertierung 30 erhaltenen Komponentengemischs 104 und des um die Konvertierung 30 herumgeführten Anteils des Komponentengemischs 103, falls vorhanden, und ggf. nach Zuspeisung eines oder mehrerer weiterer Restgase, wird ein Komponentengemisch 105 erhalten. Allgemeiner gesprochen kann hier unter Verwendung des ersten Komponentengemischs 102 ein zweites Komponentengemisch 105 bereitgestellt werden, das Wasserstoff und Kohlenmonoxid in einem zweiten Verhältnis von Wasserstoff zu Kohlenmonoxid oberhalb des ersten Verhältnisses von Wasserstoff zu Kohlenmonoxid sowie Kohlendioxid aufweist.

Das Komponentengemisch 105 wird einer Wasserstoffabtrennung 40 zugeführt, die unter Verwendung einer Druckwechseladsorptionseinrichtung und/oder einer Membrantrenneinrichtung erfolgen kann, und in der Wasserstoff in das Wasserstoffprodukt 110 überführt werden kann.

Nach der Wasserstoffabtrennung 40, die nicht notwendigerweise vollständig erfolgt, wird ein verbliebenes Gasgemisch 106 einer Kohlendioxidabtrennung 50 unterworfen, in der das Kohlendioxidprodukt 130 erhalten werden kann. Alternativ kann auch eine teilweise Rückführung des Gasgemischs 106, oder eines Teils hiervon, zwischen die Konvertierung 30 und die Wasserstoffabtrennung 40 erfolgen.

Nach der Kohlendioxidabtrennung 50, die ebenfalls nicht notwendigerweise vollständig erfolgt, wird ein verbliebenes Gasgemisch 107 einer Kohlenmonoxidabtrennung 60 unterworfen, in der das Kohlenmonoxidprodukt 120 gewonnen wird.

In der Kohlendioxidabtrennung 50 und/oder der Kohlenmonoxidabtrennung 60 anfallende Restgase können zu einer Position stromauf und/oder stromab der Konvertierung 30 zurückgeführt werden. Restgas aus der Kohlenmonoxidabtrennung 60 kann auch in der Feuerung 20 verwertet werden. Auch eine Rückführung stromauf der Synthesegaserzeugung 10, d.h. eine Zuspeisung zum Einsatz 101, ist möglich. Alternativ und/oder zusätzlich zur Verwertung des Restgases aus der Kohlenmonoxidabtrennung kann auch ein Teil des Wasserstoffprodukts 110 verfeuert werden. Beide Alternative sind jeweils lediglich aus Gründen der Übersichtlichkeit nicht gesondert veranschaulicht.

Allgemeiner gesprochen wird hier also das Komponentengemisch 105 einer Trennsequenz zugeführt, in der nacheinander Wasserstoff in das Wasserstoffprodukt 110, Kohlendioxid in ein Kohlendioxidprodukt 130, und schließlich Kohlenmonoxid in das Kohlenmonoxidprodukt 120 abgetrennt wird.

In dem Verfahren 100 wird Synthesegas also nicht in zwei Stränge aufgeteilt, sondern einer Konvertierung 30 unterzogen, um das Verhältnis von Wasserstoff zu Kohlenmonoxid entsprechend dem erforderlichen Produktverhältnis zu erhöhen. In der Wasserstoffabtrennung 40, beispielsweise einer Druckwechseladsorption, kann der Großteil des enthaltenen Wasserstoffs entfernt werden. Dadurch wird zum einen die in der Kohlenmonoxidabtrennung 60 zu behandelnde Gasmenge erheblich reduziert werden, was sich positiv auf die Anlagengröße auswirkt, und zum anderen der Kohlenmonoxidgehalt im verbleibenden Komponentengemisch 106 erhöht werden.

Anschließend wird aus dem Komponentengemisch 106 Kohlendioxid entfernt, was Kohlenmonoxidabtrennung 60 zu behandelnde Gasmenge wiederum reduziert und den relativen Kohlenmonoxidgehalt wiederum erhöht. Das Kohlendioxidprodukt 130 kann entweder für andere Prozesse verwendet werden oder dauerhaft gespeichert werden, um die Kohlendioxidemissionen des HyCO-Prozesses erheblich zu reduzieren, wodurch die Herstellung von "blauem" Wasserstoff, "blauem" Kohlenmonoxid sowie, falls gewünscht, "blauem" Dampf ermöglicht wird.

In dem letztlich verbliebenen Komponentengemisch 107 ist die Kohlenmonoxidkonzentration durch die sequentielle Entfernung von Wasserstoff und Kohlendioxid so weit angestiegen, dass eine kryogene Abtrennung und Produktgewinnung des Kohlenmonoxidprodukts, insbesondere in einer so genannten Kohlenmonoxidcoldbox trotz des ursprünglich geringen Kohlenmonoxidgehalts im geshifteten Synthesegas, dem zweiten Komponentengemisch 105, möglich ist.

Die in der Kohlenmonoxidcoldbox anfallenden Restgase können unterfeuert werden, um beispielsweise Wärme für die Synthesegaserzeugung 10 zu gewinnen oder durch Verdichtung in den Prozess zurückgeführt werden. Um die Kohlendioxidemissionen zu verringern, kann auch Wasserstoff (Rohwasserstoff aus der Kohlenmonoxidcoldbox oder Produktwasserstoff aus der Wasserstoffabtrennung 40) unterfeuert werden.

## Patentansprüche

1. Verfahren (100) zur Herstellung eines Wasserstoffprodukts (110) und eines Kohlenmonoxidprodukts (120), das umfasst:
Bereitstellen eines ersten Komponentengemischs (102), wobei das erste Komponentengemisch (102) Wasserstoff und Kohlenmonoxid in einem ersten Verhältnis von Wasserstoff zu Kohlenmonoxid aufweist;
Bereitstellen eines zweiten Komponentengemischs (105) unter Verwendung des ersten Komponentengemischs (102) oder eines Teils hiervon, wobei das zweite Komponentengemischs (104) Wasserstoff und Kohlenmonoxid in einem zweiten Verhältnis von Wasserstoff zu Kohlenmonoxid oberhalb des ersten Verhältnisses von Wasserstoff zu Kohlenmonoxid sowie Kohlendioxid aufweist; und
Unterwerfen des zweiten Komponentengemischs (105) oder eines Teils hiervon einer Trennsequenz, wobei die Trennsequenz eine Wasserstoffabtrennung (40) unter Erhalt des Wasserstoffprodukts (110), eine Kohlendioxidabtrennung (50) und
eine Kohlenmonoxidabtrennung (60) unter Erhalt des Kohlenmonoxidprodukts (120) umfasst und die Wasserstoffabtrennung (40) und die Kohlendioxidabtrennung (50) stromauf der Kohlenmonoxidabtrennung (60) vorgenommen werden.

2. Verfahren (100) nach Anspruch 1, bei dem die Wasserstoffabtrennung (40) stromauf der Kohlendioxidabtrennung (50) vorgenommen wird oder umgekehrt.

3. Verfahren (100) nach Anspruch 1 oder 2, bei dem das zweite Verhältnis von Wasserstoff zu Kohlenmonoxid bei 5:1 bis 50:1 oder 10:1 bis 20:1 liegt.

4. Verfahren (100) nach einem der vorstehenden Ansprüche, bei dem das Bereitstellen des zweiten Komponentengemischs (105) unter Verwendung des ersten Komponentengemischs (102) oder eines Teils hiervon eine Konvertierung von Kohlenmonoxid mit Wasser zu Kohlendioxid und Wasserstoff umfasst.

5. Verfahren (100) nach einem der vorstehenden Ansprüche, bei dem die Wasserstoffabtrennung (40) eine Druckwechseladsorption umfasst.

6. Verfahren (100) nach einem der vorstehenden Ansprüche, bei dem nach der Wasserstoffabtrennung (40) ein drittes Komponentengemisch (106) verbleibt, das in der Wasserstoffabtrennung (40) nicht abgetrennten Wasserstoff, Kohlenmonoxid, Methan, Stickstoff, Wasser, Kohlendioxid und/oder Argon umfasst, wobei das dritte Komponentengemisch (106) oder ein Teil hiervon der Kohlendioxidabtrennung (50) unterworfen wird.

7. Verfahren (100) nach einem der vorstehenden Ansprüche, bei dem nach der Kohlendioxidabtrennung (50) ein viertes Komponentengemisch (107) verbleibt, das Wasserstoff und Kohlenmonoxid umfasst sowie Methan, Stickstoff, Wasser und/oder Argon, und im Wesentlichen frei von Kohlendioxid ist, wobei das vierte Komponentengemisch (107) oder ein Teil hiervon der Kohlenmonoxidabtrennung (60) unterworfen wird.

8. Verfahren (100) nach einem der vorstehenden Ansprüche, bei dem die Kohlenmonoxidabtrennung (60) eine Tieftemperaturtrennung umfasst.

9. Verfahren (100) nach einem der vorstehenden Ansprüche, bei dem in der Kohlendioxidabtrennung (50) und/oder in der Kohlenmonoxidabtrennung (60) ein oder mehrere Restgase erhalten werden, wobei das eine Restgas oder zumindest eines der mehreren Restgase, oder ein oder mehrere Teile hiervon, in das Verfahren (100) zurückgeführt und/oder einer thermischen Verwertung unterworfen werden.

10. Verfahren (100) nach einem der vorstehenden Ansprüche, bei dem die Bereitstellung des ersten Komponentengemischs eine Umsetzung eines oder mehrerer Kohlenwasserstoffe mittels Dampfreformierung, Autothermreformierung und/oder Partialoxidation umfasst, die weiterhin mit einem gasbeheizten Reformer kombiniert werden können.

11. Anlage zur Herstellung eines Wasserstoffprodukts (110) und eines Kohlenmonoxidprodukts (120), die für folgende Schritte eingerichtet ist:
Bereitstellen eines ersten Komponentengemischs (102), wobei das erste Komponentengemisch (102) Wasserstoff und Kohlenmonoxid in einem ersten Verhältnis von Wasserstoff zu Kohlenmonoxid aufweist;
Bereitstellen eines zweiten Komponentengemischs (105) unter Verwendung des ersten Komponentengemischs (102) oder eines Teils hiervon, wobei das zweite Komponentengemischs (104) Wasserstoff und Kohlenmonoxid in einem zweiten Verhältnis von Wasserstoff zu Kohlenmonoxid oberhalb des ersten Verhältnisses von Wasserstoff zu Kohlenmonoxid sowie Kohlendioxid aufweist; und
Unterwerfen des zweiten Komponentengemischs (104) oder eines Teils hiervon einer Trennsequenz, wobei die Trennsequenz eine Wasserstoffabtrennung (40) unter Erhalt des Wasserstoffprodukts (110), eine Kohlendioxidabtrennung (50) und eine Kohlenmonoxidabtrennung (60) unter Erhalt des Kohlenmonoxidprodukts (120) umfasst und die Wasserstoffabtrennung (40) und die Kohlendioxidabtrennung (50) stromauf der Kohlenmonoxidabtrennung (60) vorgenommen werden.

12. Anlage nach Anspruch 11, die zur Durchführung eines Verfahrens nach einem der Ansprüche 1 bis 10 eingerichtet ist.
